# EUROPÄISCHE PATENTSCHRIFT

(11) **EP 2 317 178 B1**
(45) Veröffentlichungstag und Bekanntmachung des Hinweises auf die Patenterteilung: **08.02.2012**
(21) Anmeldenummer: 10186590.5
(22) Anmeldetag: 05.10.2010
(51) Int. Cl.: F16H 25/22, F16D 65/14

(54) **Kugelgewindetrieb für eine Feststellbremse eines Kraftfahrzeuges**
Ball screw for an electric hand brake of a motor vehicle
Vis d'entraînement à bille pour un frein de stationnement d'un véhicule automobile

(30) Priorität: 28.10.2009 DE 102009051123
(43) Veröffentlichungstag der Anmeldung: 04.05.2011
(73) Patentinhaber: Schaeffler Technologies GmbH & Co. KG, 91074 Herzogenaurach (DE)
(72) Erfinder: Osterlänger, Jürgen, 91448, Emskirchen (DE); Bärthlein, Stefanie, 91460, Baudenbach (DE)

(56) Entgegenhaltungen:
- WO-A1-2008/037738
- WO-A1-2009/046899
- DE-A1-102008 051 350
- DE-A1-102009 012 235

## Beschreibung

Die vorliegende Erfindung betrifft einen Kugelgewindetrieb wie z.B aus DE-A-10 2009 012 235 bekannt Kugelgewindetriebe wandeln eine Relativdrehung zwischen einer Gewindespindel und einer Gewindemutter in eine translatorische Relativverschiebung zwischen Gewindespindel und Gewindemutter um. Die Erfindung betrifft auch Feststellbremsen von Kraftfahrzeugen, die mit derartigen Kugelgewindetrieben versehen sind. In dieser Anwendung kann beispielsweise die Gewindemutter unter Rotation der Gewindemutter axial verlagert und gegen einen Bremskolben angedrückt werden, der wiederum einen Bremsbelag gegen eine Bremsscheibe andrücken kann.

Aus WO 2009/046899 A1 beispielsweise war ein Kugelgewindetrieb für eine elektromechanisch betätigbare Kraftfahrzeugbremse bekannt geworden. Figur 20 dieser Druckschrift zeigt einen Kugelgewindetrieb, mit einer auf einer Gewindespindel angeordneten Gewindemutter. Die Gewindemutter und die Gewindespindel begrenzen mit ihren Kugelrillen einen schraubenförmig um die Längsachse der Gewindespindel gewundenen Kugelkanal, in dem Kugeln angeordnet sind.

Die Kugeln sind in Kugeltaschen eines hülsenförmigen Kugelkäfigs aufgenommen. Der Kugelkäfig ist mit einer Vielzahl von über seinen Umfang verteilten und entlang des Kugelkanals angeordneten Kugeltaschen versehen. Der koaxial zu der Gewindespindel angeordnete Kugelkäfig erstreckt sich über die gesamte axiale Länge der Gewindemutter und ragt in axialer Richtung weit über das eine Ende der Gewindemutter hinaus. Auf diesem herausragenden Teil des Kugelkäfigs ist ein als Druckdrehfeder ausgebildetes Federelement angeordnet. Diese Druckdrehfeder ist gebildet durch einen schraubenförmig um die Längsachse der Gewindespindel gewundenen Federdraht, dessen eines Ende an dem herausragenden Teil des Kugelkäfigs und dessen anderes Ende an der Gewindemutter gehaltert ist.

Bei derartigen Bremsen kann eine geringe Drehung des Käfigs genügen, um einen gewünschten axialen Vorschub der Gewindemutter zu erzielen. Die Druckdrehfeder sorgt dafür, dass bei unbelastetem Kugelgewindetrieb der Kugelkäfig in axialer Richtung in eine Ausgangsstellung verlagert wird. Bei unbelastetem Kugelgewindetrieb kann der Kugelkäfig ohne Relativdrehung zwischen der Gewindemutter und der Gewindespindel unter einer schraubenden Bewegung entlang des Kugelkanals verschoben werden, weil die Kugeln lediglich rutschen und nicht an den Kugelrillen der Gewindespindel und der Gewindemutter abwälzen.

Nachteilig bei diesem Kugelgewindetrieb kann dessen axialer Bauraumbedarf sein. Ferner kann bei dem Einsetzen des Kugelgewindetriebes in ein Maschinenteil, beispielsweise in einen Bremskolben, die offen liegende Druckdrehfeder beschädigt oder ein Federende aus einer Lagerstelle heraus gehebelt werden.

Aufgabe der vorliegenden Erfindung war es, einen Kugelgewindetrieb nach den Merkmalen des Oberbegriffs des Anspruchs 1 anzugeben, bei dem diese Nachteile vermieden sind.

Erfindungsgemäß wurde diese Aufgabe durch die Merkmale des Anspruchs 1 gelöst.

Bei diesem erfindungsgemäßen Kugelgewindetrieb ist der axiale Bauraumbedarf erheblich reduziert. Ferner kann eine Montage des Kugelgewindetriebes in ein Maschinenteil erfolgen, ohne dass die Gefahr einer Beschädigung des Federelementes besteht.

Die Gewindemutter kann in einem spanlosen Umformverfahren in großen Stückzahlen in wirtschaftlicher Weise hergestellt werden. Bei einer erfindungsgemäßen Weiterbildung ist vorgesehen, dass in dem Ringspalt ein an der Gewindemutter gehaltenes Stützelement vorgesehen ist, an dem das eine Federende des Federelementes abgestützt ist. Dieses Stützelement kann in die Gewindemutter eingesetzt und form- und/oder kraftschlüssig mit der Gewindemutter verbunden sein. Für eine formschlüssige Verbindung kann am Innenumfang der Gewindemutter beispielsweise eine Ausnehmung in Form einer kleinen Mulde ausgebildet sein, wobei der Vorsprung durch eine an die Mulde angepasste Wölbung des Stützelementes gebildet sein kann. Die an der Gewindemutter vorgesehenen Mulde kann auf einfache Art und Weise in einem spanlosen Umformverfahren bereitgestellt werden.

Das Stützeelement ist als Stützring ausgebildet, der mit einer insbesondere radial einwärts vorspringenden Stütze als Anlage für das eine Federende des Federelementes versehen ist. Derartige Stützringe können ebenfalls in einem spanlosen Umformverfahren bereitgestellt werden. Hier eignet sich insbesondere das Tiefziehen, mit dem auf einfache Art und Weise auch die radial einwärts vorspringende Stütze geformt werden kann. So kann auf einfache Art und Weise die Stütze durch einen einstückig an den Stützring angeformten, von dem Stützring abgewinkelten Schenkel gebildet sein.

Eine besonders günstige erfindungsgemäße Weiterbildung sieht vor, dass in dem Ringspalt ein weiteres Federelement angeordnet ist, wobei beide Federelemente in einander entgegen gesetzten Federrichtungen ein- und ausfedern, und wobei beide Federelemente jeweils mit ihrem einen Federende an der Gewindemutter und mit ihrem anderen Federende an dem Kugelkäfig abgestützt sind. Diese erfindungsgemäße Weiterbildung eignet sich insbesondere für die weiter oben erwähnten Feststellbremsen von Kraftfahrzeugen. Bei unbelastetem Kugelgewindetrieb - die Kugeln können also im Kugelkanal rutschen, ohne an den Kugelrillen abzuwälzen - ist der Kugelkäfig in seiner Ausgangsstellung, wobei beide Federelemente unbelastet sind oder in einem Kräftegleichgewicht zueinander stehen. Sollte der Kugelkäfig außerhalb seiner vorgesehenen Ausgangsstellung angeordnet sein, ist eine der beiden Federelemente beispielsweise auf Druck oder auf Zug belastet; unter Abbau dieser Federkraft wird der Kugelkäfig bei unbelastetem Kugelgewindetrieb in seine Ausgangsstellung verlagert.

Vorzugsweise sind die beiden Federelemente jeweils als so genannte Wurmfeder ausgebildet und entlang der Kugelrillen angeordnet. Der Durchmesser der Wurmfeder ist dabei vorzugsweise kleiner als der Durchmesser des Kugelkanals. Bei einer Wurmfeder ist der Federdraht schraubenförmig um eine Achse herum gewunden.

Der hülsenförmig ausgebildete Kugelkäfig kann mit einer Vielzahl von über seinen Umfang verteilten und entlang des Kugelkanals angeordneten Kugeltaschen zur Aufnahme der Kugeln versehen sein. Je nach Belastung des Kugelgewindetriebes können in jeder Tasche eine oder mehrere Kugeln angeordnet sein. Damit ein Durchrutschen der Kugeln gewährleistet ist, kann bei einer erfindungsgemäßen Weiterbildung im Kugelkanal ein Radialspiel der Kugeln zwischen 20 µm und 200 µm vorgesehen sein.

Nachstehend wird die Erfindung anhand von zwei in insgesamt 12 Figuren abgebildeten Ausführungsbeispielen näher erläutert. Es zeigen:
- Figur 1: einen Längsschnitt durch eine Feststellbremse eines Kraft- fahrzeuges mit einem erfindungsgemäßen Kugelgewinde- trieb,
- Figur 2: den Kugelgewindetrieb aus Figur 1 vergrößert und im Längsschnitt,
- Figur 3: einen Querschnitt durch den Kugelgewindetrieb aus Figur 2,
- Figur 4: eine Ausschnittsvergrößerung aus Figur 2,
- Figur 5: einen Stützring des erfindungsgemäßen Kugelgewindetrie- bes in perspektivischer Darstellung,
- Figur 6: den Stützring aus Figur 5 im Längsschnitt,
- Figuren 7 und 8: einen Kugelkäfig des erfindungsgemäßen Kugelgewinde- triebes in unterschiedlichen perspektivischen Darstellun- gen ,
- Figur 9: eine Gewindemutter des erfindungsgemäßen Kugelgewin- de-triebes in perspektivischer Darstellung,
- Figur 10: die Gewindemutter aus Figur 9 in einer Ansicht,
- Figur 11: die Gewindemutter aus Figur 9 im Längsschnitt, und
- Figur 12: einen weiteren erfindungsgemäßen Kugelgewindetrieb im Querschnitt.

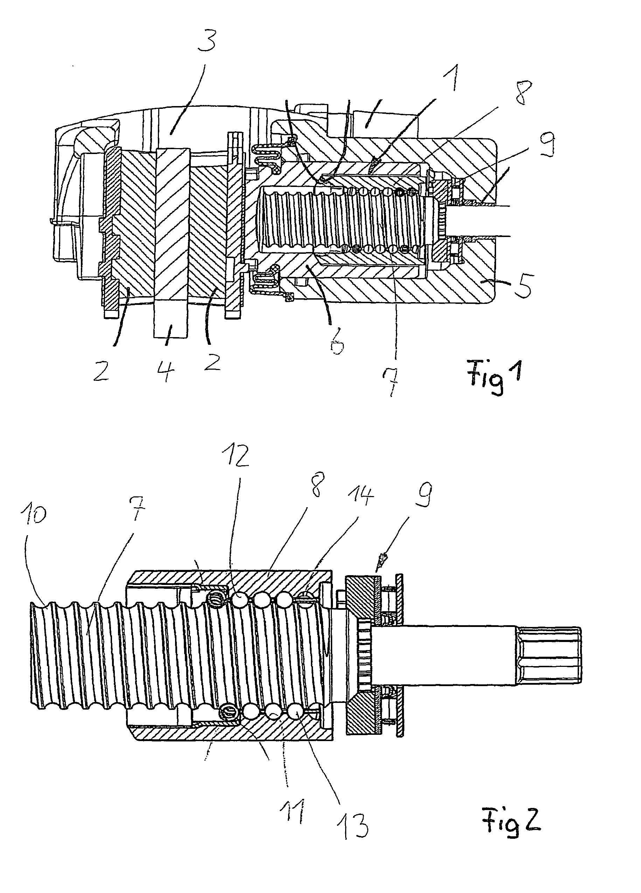

Figur 1 zeigt eine Betriebsbremse eines Kraftfahrzeuges, die mit einer erfindungsgemäßen Feststellbremse kombiniert ist, wobei diese Feststellbremse mit einem erfindungsgemäßen Kugelgewindetrieb 1 versehen ist. Zwischen zwei Bremsbacken 2 einer Bremszange 3 ist eine Bremsscheibe 4 in bekannter Weise angeordnet. In einem Gehäuse 5 ist ein Bremskolben 6 angeordnet. Der Bremskolben 6 kann mit Hydraulikflüssigkeit beaufschlagt und entlang seiner Kolbenachse in Richtung auf die Bremsbacken 2 angedrückt werden. Unter einer Betätigung des Bremskolbens 6 wird die Bremsscheibe 4 zwischen den beiden Bremsbacken eingespannt.

In dem hohlen Bremskolben 6 ist der erfindungsgemäße Kugelgewindetrieb 1 angeordnet. Der Kugelgewindetrieb 1 weist eine auf einer Gewindespindel 7 angeordnete Gewindemutter 8 auf. Für eine Betätigung der Feststellbremse wird die Gewindespindel 7 über einen nicht abgebildeten Motor in Rotation versetzt. Unter Drehung der Gewindespindel 7 wird die Gewindemutter 8 axial gegenüber der Gewindespindel 7 verlagert. Die Gewindemutter 8 drückt gegen den Bremskolben 6 und drückt diesen schließlich gegen die benachbart angeordnete Bremsbacke 4. Die Gewindespindel 7 ist über ein Axiallager 9 an dem Gehäuse 5 axial gelagert. Die axialen Druckkräfte zwischen dem Bremskolben 6 und der Gewindemutter 8 werden über die Gewindespindel 7 und das Axiallager 9 in das Gehäuse 5 übertragen.

Figur 2 zeigt den erfindungsgemäßen Kugelgewindetrieb 1 in vergrößerter Darstellung. Die Gewindespindel 7 ist mit einer schraubenförmig um die Spindelachse gewundenen Kugelrille 10 versehen. Die Gewindemutter 8 ist an ihrem Innenumfang mit einer schraubenförmig um die Mutterachse gewundenen Kugelrille 11 versehen. Die Kugelrillen 10 und 11 begrenzen gemeinsam einen schraubenförmigen Kugelkanal 12, in dem Kugeln 13 angeordnet sind. Die Kugeln 13 können an den Kugelrillen 10,11 abwälzen. Die Kugeln 11 sind in einem Kugelkäfig 14 aufgenommen.

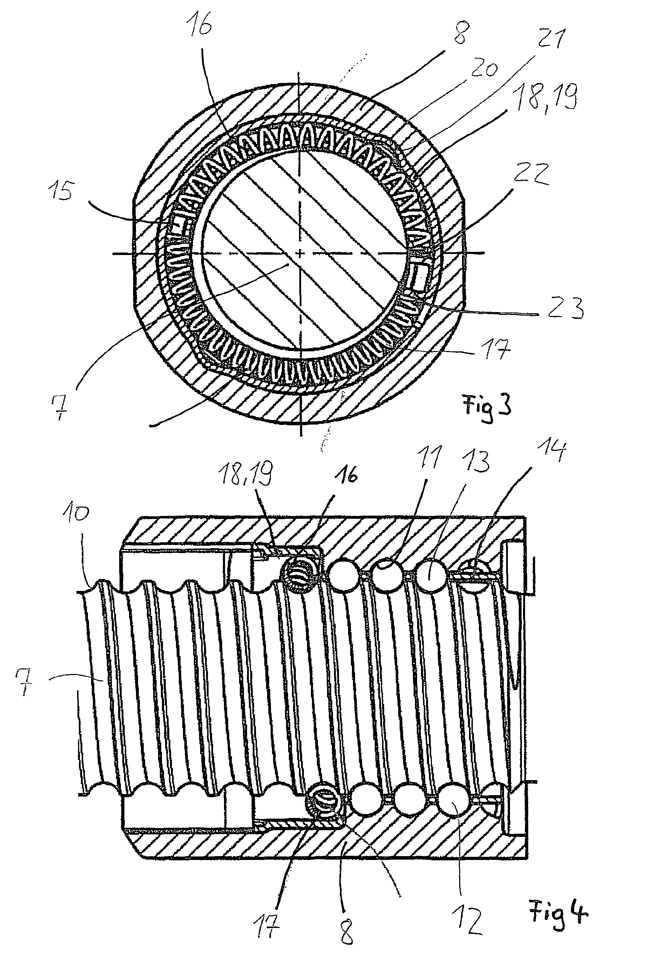

Die Figuren 3 und 4 zeigen den Kugelgewindetrieb 1 aus Figur 2 in vergrößerter Darstellung im Querschnitt und im Längsschnitt. Der hülsenförmig ausgebildete Kugelkäfig 14 weist an seinem einen axialen Ende einen axial vorspringenden Finger 15 auf.

In einem von der Gewindespindel 7 und der Gewindemutter 8 begrenzten Ringspalt sind zwei durch Wurmfedern 16,17 gebildete Federelemente 16a, 17a angeordnet, die entlang der Kugelrille 10 der Gewindespindel 7 angeordnet sind. Einander zugewandte Enden der beiden Wurmfedern 16,17 greifen an dem Finger 15 des Kugelkäfigs 14 an, wobei der Finger 15 zwischen diesen beiden Enden der beiden Wurmfedern 16,17 angeordnet ist. Das jeweils andere Ende der beiden Wurmfedern 16,17 ist an einem Stützelement 18 abgestützt.

Das Stützeelement 18 ist durch einen am Innenumfang der Gewindemutter 8 angeordneten Stützring 19 gebildet, der form- und kraftschlüssig mit der Gewindemutter 8 verbunden ist. Der spanlos aus Blech hergestellte Stützring 19 weist mehrere über den Umfang verteilt angeordnete Wölbungen 20 auf, die in angepasste Mulden 21 eingreifenden, wobei diese Mulden 21 am Innenumfang der Gewindemutter 8 ausgebildet sind. Der Stützring 19 weist zwei radial einwärts vorspringende Schenkel 22,23 auf, die als Stütze 22a, 23a für die beiden Wurmfedern 16,17 vorgesehen sind.

Der Figur 3 ist zu entnehmen, dass die anderen Enden der beiden Wurmfedern 16,17 an diesen Schenkeln 22,23 abgestützt sind. Die beiden Wurmfedern 16,17 sind vorliegend als Druckfedern ausgebildet und federn in einander entgegen gesetzten Federrichtungen ein und aus.

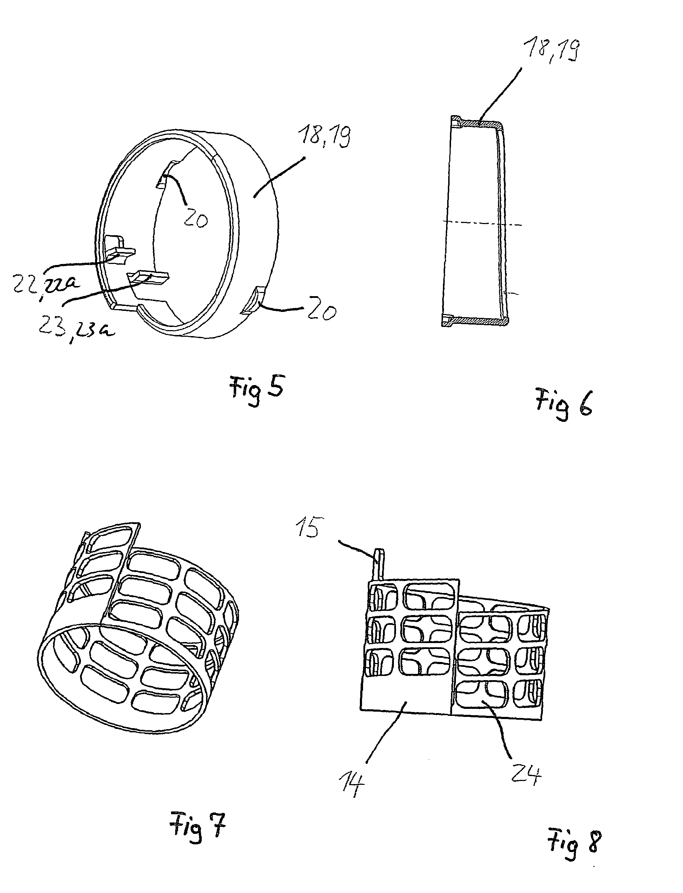

Die Figuren 5 und 6 zeigen den Stützring 19 in perspektivischer Darstellung sowie im Längsschnitt. Deutlich sind in der Figur 5 die radial einwärts gerichteten Schenkel 22, 23 zu erkennen.

Die Figuren 7 und 8 zeigen den Kugelkäfig 14 jeweils in perspektivischer Darstellung. Insbesondere der Figur 8 kann entnommen werden, dass an dem Kugelkäfig 14 der axial vorspringende Finger 15 einstückig angeformt ist. Der Kugelkäfig 14 ist mit einer Vielzahl von über seinen Umfang verteilt angeordneten Kugeltaschen 24 versehen, die entlang des schraubenförmigen Kugelkanals 12 angeordnet sind. In jeder Kugeltasche 24 sind vorliegend zwei Kugeln 13 angeordnet, die hier jedoch nicht abgebildet sind. Es ist möglich, die Anzahl der Kugeln 13 in den Kugeltaschen zu variieren. So kann bei erfindungsgemäßen Weiterbildungen lediglich eine einzige Kugel in einer Kugeltasche angeordnet sein, es können jedoch auch drei Kugeln in einer Kugeltasche angeordnet sein.

In der Einbausituation sind der Stützring 18 und der Kugelkäfig 14 axial hintereinander angeordnet. Die einander zugewandten Stirnseiten des Stützringes 18 und des Kugelkäfigs 14 sind nicht plan in einer Ebene, sondern vielmehr entlang einer Schraubenlinie ausgebildet, die von ihrer Steigung her der Steigung des Kugelkanals 12 entspricht. In der Einbausituation sind die einander zugewandten Stirnseiten des Stützringes 18 und des Kugelkäfigs 14 parallel zueinander angeordnet. Diese Ausbildung ermöglicht eine größtmögliche Anzahl von Kugeltaschen 24 an dem Kugelkäfig 14.

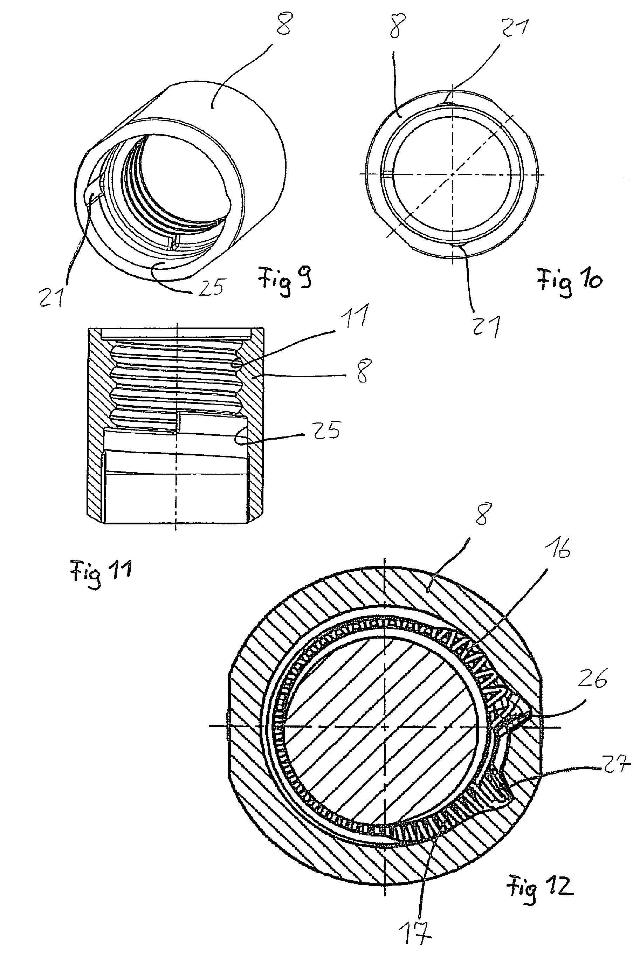

Die Figuren 9,10 und 11 zeigen die Gewindemutter 8 in perspektivischer Darstellung, in einer Ansicht und im Längsschnitt. Insbesondere den Figuren 9 und 11 kann entnommen werden, dass am Innenumfang der Gewindemutter 8 eine Freistellung 25 für den hier nicht abgebildeten Stützring 19 ausgebildet ist. Die Formgebung dieser Freistellung 25 ist der Kontur des Stützringes 19 angepasst.

Figur 12 zeigt ein weiteres Ausführungsbeispiel eines erfindungsgemäßen Kugelgewindetriebes, der sich von dem zuvor beschriebenen Ausführungsbeispiel lediglich dadurch unterscheidet, dass die beiden Wurmfedern 16,17 unter Wegfall eines separaten Stützelementes unmittelbar an der Gewindemutter 8 abgestützt sind. Zu diesem Zweck ist die Gewindemutter 8 an ihrem Innenumfang mit zwei umfangsseitig einander benachbart angeordneten Anschlagflächen 26,27 versehen. Diese Anschlagflächen 26,27 sind durch entsprechende Materialaussparungen an der Gewindemutter 8 bereitgestellt. Diese erfindungsgemäße Weiterbildung ist sehr robust und kostengünstig in ihrer Herstellung. Selbst bei einem Federblockbetrieb kann sich der Federanschlag in der Mutter nicht verdrehen.

Die beiden hier abgebildeten erfindungsgemäßen Kugelgewindetriebe sind mit einem ausreichenden Radialspiel für die Kugeln in dem Kugelkanal versehen, dass zwischen etwa 20 µm bis maximal 200 µm eingestellt ist.

In beiden erfindungsgemäßen Ausführungsbeispielen sorgen die als Wurmfedern ausgeführten Federelemente für eine einwandfreie Ausgangsstellung des Kugelkäfigs bei unbelastetem Kugelgewindetrieb, was nachstehend näher erläutert wird.

Wenn die Betriebsbremse betätigt wird, drückt der hydraulisch beaufschlagte Bremskolben 6 gegen die Bremsbacken 2, wobei der Bremskolben 6 gegenüber der Gewindemutter 8 axial verlagert wird. Betätigt nun der Fahrer die Feststellbremse, wird die Gewindespindel 7 in Rotation versetzt, wobei die Gewindemutter 8 axial in Richtung auf den Bremskolben 6 verlagert wird. Während dieser Phase ist die Gewindemutter 8 lastfrei, und die Kugeln 13 rutschen entlang des Kugelkanals 12. Eine Relativdrehung des Kugelkäfigs 14 gegenüber der Gewindemutter 8 unterbleibt. Schließlich schlägt die Gewindemutter 8 stirnseitig an den Bremskolben 6 an und wird axial belastet. Unter dieser axialen Last werden die Kugeln 13 belastet, die nun an den Kugelrillen 10, 11 abwälzen. Der Kugelkäfig 14 verdreht nun relativ gegenüber der Gewindemutter 8, wobei die eine als Nachstellfeder arbeitende Wurmfeder 16 komprimiert wird. Schließlich ist der Stellweg der Gewindemutter 8 beendet und die Feststellbremse ist aktiviert.

Wird die Feststellbremse wieder gelöst, erfolgt ein Zurückfahren der Gewindemutter 8. Bei entlasteter Gewindemutter 8 wird der Kugelkäfig14 unter Entlastung der komprimierten Wurmfeder 16 wieder in seine Ausgangsstellung gefahren.

Es kann die Situation eintreten, dass die Betriebsbremse noch während der Betätigung der Feststellbremse mit sehr hoher Bremswirkung aktiviert ist. Dann wird die aufgrund der Betätigung der Feststellbremse vorhandene axiale Druckkraft zwischen dem Bremskolben 6 und der Gewindemutter 8 erhöht, sobald der hydraulische Druck von der Betriebsbremse entfernt ist. Denn unter elastischer Entspannung der zuvor eingespannten Bauteile - beispielsweise kann die Bremszange elastisch aufgeweitet sein - drückt der Bremskolben 6 verstärkt gegen die Gewindemutter 8.

In der zuvor beschriebenen Situation stehen die Kugeln 13 während des Lösens der Feststellbremse über einen längeren Rollweg in Wälzkontakt mit den Kugelrillen 10, 11. Zunächst entspannt die als Nachstellfeder arbeitende Wurmfeder 16. Weil aber aufgrund eines erhöhten Drehwinkels unter Last der Kugelkäfig 14 weiter bewegt wird, hebt der Kugelkäfig 14 von der Wurmfeder 16 ab. Die vorgesehene Ausgangsstellung des Kugelkäfigs 14 wird also nicht erreicht, sondern überschritten. Der Kugelkäfig 14 drückt nun gegen die andere Wurmfeder 17, die als Vordruckfeder arbeitet. Unter Komprimierung der Vordruckfeder wird der Kugelkäfig 14 solange gegenüber der Gewindemutter 8 verfahren, bis die Kugeln 13 lastfrei sind. Nun wird der Kugelkäfig 14 unter dem Druck der Vordruckfeder bei durchrutschenden Kugeln 13 in Richtung seiner vorgesehenen Ausgangsstellung verfahren, bis die Vordruckfeder entlastet oder ein Kräftegleichgewicht zwischen den beiden Wurmfedern 16, 17 herrscht. Nun ist der Kugelkäfig 14 in seiner vorgesehenen Ausgangsposition.

Die Vordruckfeder ist nicht zwingend erforderlich. Es sind auch erfindungsgemäße Ausführungsbeispiele möglich, bei denen lediglich die Nachstellfeder vorgesehen ist. Erfindungsgemäß ist in allen Ausführungsbeispielen vorgesehen, dass der Kugelkäfig und das Federelement in dem von der Gewindespindel und der Gewindemutter begrenzten Ringspalt innerhalb der axialen Erstreckung der Gewindemutter angeordnet sind, vorzugsweise einschließlich der Federenden.

**Positionszahlenliste**
- 1: Kugelgewindetrieb
- 2: Bremsbacke
- 3: Bremszange
- 4: Bremsscheibe
- 5: Gehäuse
- 6: Bremskolben
- 7: Gewindespindel
- 8: Gewindemutter
- 9: Axiallager
- 10: Kugelrille
- 11: Kugelrille
- 12: Kugelkanal
- 13: Kugel
- 14: Kugelkäfig
- 15: Finger
- 16: Wurmfeder
- 16a: Federelement
- 17: Wurmfeder
- 17a: Federelement
- 18: Stützelement
- 19: Stützring
- 20: Wölbung
- 21: Mulde
- 22: Schenkel
- 22a: Stütze
- 23: Schenkel
- 23a: Stütze
- 24: Kugeltasche
- 25: Freistellung
- 26: Anschlagfläche
- 27: Anschlagfläche

## Patentansprüche

1. Kugelgewindetrieb (1), mit einer auf einer Gewindespindel (7) angeordneten Gewindemutter (8), und mit einem von Kugelrillen (10, 11) der Gewindespindel (7) und der Gewindemutter (8) begrenzten, schraubenförmigen Kugelkanal (12), in dem Kugeln (13) angeordnet sind, und mit einem die Kugeln (13) aufnehmenden Kugelkäfig (14), und mit einem Federelement (16a, 17a), das mit einem Federende an der Gewindemutter (8) und das mit einem anderen Federende an dem Kugelkäfig (14) abgestützt ist, wobei das Federelement (16, 17a) in einem von der Gewindemutter (8) und der Gewindespindel (7) begrenzten Ringspalt und axial benachbart zu dem Kugelkäfig (14) angeordnet ist, **dadurch gekennzeichnet, dass** ein in dem Ringspalt angeordnetes, an der Gewindemutter (8) gehaltenes Stützelement (18) vorgesehen ist, an dem das eine Federende abgestützt ist und wobei das Stützelement (18) als Stützring (19) mit einer insbesondere radial einwärts vorspringenden Stütze (22a, 23a) als Anlage für das eine Federende ausgebildet ist.

2. Kugelgewindetrieb nach Anspruch 1, bei dem das Stützelement (18) insbesondere am Innenumfang der Gewindemutter (8) durch Kraftschluß und / oder Formschluss aufgenommen ist.

3. Kugelgewindetrieb (1) nach Anspruch 1, bei dem der Stützring (19) aus Blech im Umformverfahren hergestellt ist, wobei die Stütze (22a, 23a) durch einen einstückig an den Stützring (19) angeformten, von dem Stützring (19) abgewinkelten Schenkel (22, 23) gebildet ist.

4. Kugelgewindetrieb (1) nach Anspruch 1, bei dem in dem Ringspalt ein weiteres Federelement (16a, 17a) angeordnet ist, wobei beide in einander entgegen gesetzten Federrichtungen ein- und ausfedernde Federelemente (16a, 17a) jeweils mit ihrem einen Federende gegenüber der Gewindemutter (8) und mit ihrem anderen Federende an dem Kugelkäfig (14) abgestützt sind.

5. Kugelgewindetrieb (1) nach Anspruch 1, bei dem der hülsenförmig ausgebildete Kugelkäfig (14) mit einer Vielzahl von über seinen Umfang verteilten und entlang des Kugelkanals (12) angeordneten Kugeltaschen (24) zur Aufnahme der Kugeln (13) versehen ist.

6. Kugelgewindetrieb (1) nach Anspruch 1, bei dem ein Radialspiel der Kugeln (13) in dem Kugelkanal (12) zwischen 20µm und 200µm vorgesehen ist.

7. Feststellbremse eines Kraftfahrzeuges, mit einem zur Erzielung einer Bremswirkung entlang seiner Kolbenachse verschiebbar angeordneten Bremskolben (6), und mit einem Kugelgewindetrieb (1) nach einem oder mehreren der vorangegangenen Ansprüche zur Betätigung des Bremskolbens (6).

8. Feststellbremse eines Kraftfahrzeuges nach Anspruch 7, bei der die Gewindemutter (8) und der Bremskolben (6) mit Anschlagflächen (26, 27) zum Anschlagen aneinander versehen sind.

## Claims

1. Ball screw (1), comprising a threaded nut (8) arranged on a threaded spindle (7) and a helical ball channel (12) delimited by ball grooves (10, 11) of the threaded spindle (7) and of the threaded nut (8), in which ball channel (12) balls (13) are arranged, and comprising a ball cage (14) receiving the balls (13) and a spring element (16a, 17a) which bears with one end against the threaded nut (8) and with another end against the ball cage (14), the spring element (16a, 17a) being arranged axially adjacent to the ball cage (14) in an annular gap delimited by the threaded nut (8) and the threaded spindle (7), **characterized in that** there is provided a support element (18) arranged in the annular gap and retained on the threaded nut (8), against which support element (18) one spring end bears, and the support element (18) being configured as a support ring (19) with an, in particular, radially inward-projecting support (22a, 23a) as an abutment for one spring end.

2. Ball screw according to Claim 1, wherein the support element (18) is retained non-positively and/or positively on, in particular, the inner circumference of the threaded nut (8).

3. Ball screw (1) according to Claim 1, wherein the support ring (19) is produced from sheet metal in a forming process in which the support (22a, 23a) is formed by an arm (22, 23) angled from the support ring (19) and formed integrally with the support ring (19).

4. Ball screw (1) according to Claim 1, wherein a further spring element (16a, 17a) is arranged in the annular gap, the two spring elements (16a, 17a), which are compressed and extend in mutually opposite spring directions, each bearing with their one spring end against the threaded nut (8) and with their other spring end against the ball cage (14).

5. Ball screw (1) according to Claim 1, wherein the sleeve-shaped ball cage (14) is provided with a plurality of ball pockets (24) for receiving the balls (13), which ball pockets (24) are distributed around its circumference and arranged along the ball channel (12).

6. Ball screw (1) according to Claim 1, wherein a radial play from 20 µm to 200 µm of the balls (13) in the ball channel (12) is provided.

7. Parking brake of a motor vehicle, comprising a brake piston (6) arranged displaceably along its piston axis in order to achieve a braking effect, and a ball screw (1) according to one or more of the preceding claims for actuating the brake piston (6).

8. Parking brake of a motor vehicle according to Claim 7, wherein the threaded nut (8) and the brake piston (6) are provided with stop faces (26, 27) for abutting one against the other.

## Revendications

1. Vis d'entraînement à billes (1), comprenant un écrou fileté (8) disposé sur une broche filetée (7), et un canal de billes (12) en forme d'hélice, limité par des gorges de billes (10, 11) de la broche filetée (7) et de l'écrou fileté (8), dans lequel sont disposées des billes (13), et comprenant une cage de billes (14) recevant les billes (13), et un élément de ressort (16a, 17a) qui est supporté par une extrémité de ressort sur l'écrou fileté (8) et par une autre extrémité de ressort sur la cage de billes (14), l'élément de ressort (16a, 17a) étant disposé dans une fente annulaire limitée par l'écrou fileté (8) et la broche filetée (7) et en position axialement adjacente à la cage de billes (14), **caractérisée en ce qu'**un élément de support (18) maintenu sur l'écrou fileté (8) est disposé dans la fente annulaire, sur lequel élément de support est supporté une extrémité de ressort, et l'élément de support (18) étant réalisé sous forme de bague de support (19) avec un appui (22a, 23a) saillant notamment radialement vers l'intérieur en tant que butée pour ladite une extrémité de ressort.

2. Vis d'entraînement à billes selon la revendication 1, dans laquelle l'élément de support (18) est reçu notamment sur la périphérie interne de l'écrou fileté (8) par engagement par force et/ou par coopération de forme.

3. Vis d'entraînement à billes (1) selon la revendication 1, dans laquelle la bague de support (19) est fabriquée en tôle par un procédé de façonnage, l'appui (22a, 23a) étant formé par une branche (22, 23) façonnée d'une seule pièce sur la bague de support (19) et coudée depuis la bague de support (19).

4. Vis d'entraînement à billes (1) selon la revendication 1, dans laquelle un autre élément de ressort (16a, 17a) est disposé dans la fente annulaire, les deux éléments de ressort (16a, 17a), comprimés et détendus élastiquement dans des directions de ressort opposées, étant à chaque fois supportés avec l'une de leurs extrémités de ressort par rapport à l'écrou fileté (8) et avec leur autre extrémité de ressort sur la cage de billes (14).

5. Vis d'entraînement à billes (1) selon la revendication 1, dans laquelle la cage de billes (14) réalisée sous forme de douille est pourvue d'une pluralité de cavités de billes (24) pour recevoir les billes (13), réparties sur sa périphérie et disposées le long du canal de billes (12).

6. Vis d'entraînement à billes (1) selon la revendication 1, dans laquelle il est prévu un jeu radial des billes (13) dans le canal de billes (12) compris entre 20 µm et 200 µm.

7. Frein de stationnement d'un véhicule automobile, comprenant un piston de freinage (6) disposé de manière déplaçable le long de son axe de piston pour produire un effet de freinage, et comprenant une vis d'entraînement à billes (1) selon l'une quelconque ou plusieurs des revendications précédentes, pour l'actionnement du piston de freinage (6).

8. Frein de stationnement d'un véhicule automobile selon la revendication 7, dans lequel l'écrou fileté (8) et le piston de freinage (6) sont pourvus de surfaces de butée (26, 27), pour buter l'un contre l'autre.
